# FASCICULE DE BREVET EUROPEEN

(11) **EP 1 002 606 B1**
(45) Date de publication et mention de la délivrance du brevet: **15.05.2002**
(21) Numéro de dépôt: 99402823.1
(22) Date de dépôt: 15.11.1999
(51) Int. Cl.: B23B 51/04, B23B 51/10

(54) **Foret tubulaire double**
Doppelter röhrförmiger Bohrer
Double tubular drill

(30) Priorité: 19.11.1998 FR 9814528
(43) Date de publication de la demande: 24.05.2000
(73) Titulaire: LEGRAND, F-87045 Limoges Cédex (FR); LEGRAND SNC, F-87000 Limoges (FR)
(72) Inventeur: Favalessa, Thierry, 87240 Ambazac (FR)
(74) Mandataire: CABINET BONNET-THIRION

(56) Documents cités:
- EP-A- 0 458 047
- DE-A- 2 410 120
- DE-A- 3 423 522
- DE-U- 9 106 185

## Description

La présente invention concerne une scie cloche telle que définie dans le préambule de la revendication 1. Une telle scie cloche est connue du document DE 24 10 120 A. Cette scie cloche sert d'une manière générale au façonnage d'un logement dans une cloison sèche pour l'encastrement, dans celle-ci, d'une boîte, communément dite boîte d'encastrement, propre, elle-même, au logement du mécanisme d'un quelconque appareillage, et, par exemple, d'un quelconque appareillage électrique.

Par cloison sèche, on entend ici, de manière usuelle, une cloison qui, formée, en pratique, d'éléments préfabriqués, comporte deux plaques de façade relativement minces, avec, entre celles-ci, suivant des configurations très diverses, des vides couramment mis à profit pour la circulation de canalisations et/ou de conducteurs électriques propres à la desserte des appareillages qui y sont implantés.

Le façonnage d'un logement dans une telle cloison sèche pour un tel appareillage implique la découpe d'un trou dans celle de ses plaques de façade à partir de laquelle doit être implantée la boîte d'encastrement correspondante.

Lorsque, comme en l'espèce, celle-ci a un contour circulaire, la découpe de ce trou se fait à l'aide d'une scie cloche, c'est-à-dire à l'aide d'une scie comportant une lame de scie de forme générale cylindrique.

La présente invention vise plus particulièrement le cas où la boîte d'encastrement à mettre en place comporte, extérieurement en saillie, à son débouché, une collerette, formant garde, pour son appui sur la plaque de façade concernée.

Il est nécessaire, dans un tel cas, d'encastrer aussi cette collerette dans la plaque de façade, pour éviter qu'elle fasse saillie sur celle-ci.

A défaut, cette collerette serait une gêne lors de l'application éventuelle d'un revêtement de surface sur cette plaque de façade, et elle pourrait en outre conduire ultérieurement à un décollement local de ce revêtement de surface, au détriment de celui-ci.

Pour recevoir cette collerette, il est donc nécessaire de façonner un lamage autour du trou pratiqué dans la plaque de façade.

Les scies cloches mises en oeuvre comportent donc, usuellement, dans ce but, à un deuxième niveau par rapport aux dents de la lame de scie, des moyens d'enlèvement de matière, qui, disposés coaxialement autour de cette lame de scie, interviennent axialement en retrait par rapport à celle-ci.

A ce jour, ces moyens d'enlèvement de matière interviennent par abrasion.

Il s'agit, en effet, en pratique, d'une couronne abrasive, qui s'étend annulairement à compter de la racine même de la lame de scie, et qui présente en surface des stries ou autres aspérités de nature à assurer, par grignotement, un meulage local de la plaque de façade travaillée.

Si cette disposition peut éventuellement donner satisfaction pour certaines plaques de façade, tel n'est pas le cas lorsque, comme cela est le cas le plus fréquent, cette plaque de façade est une plaque de plâtre, c'est-à-dire une plaque comportant une âme en plâtre en sandwich entre deux feuilles de carton.

Il s'avère, en effet, que, sans doute par suite d'un bourrage du carton, le meulage de cette plaque de façade ne conduit, au mieux, qu'à l'obtention d'un lamage relativement incertain, avec, de surcroît, la présence, autour du trou correspondant, d'un bourrelet de matière, qui, à la manière d'une bavure, fait saillie sur cette plaque de façade, et qu'il est donc nécessaire, en pratique, d'éliminer à la main, pour éviter, comme précédemment le risque d'un décollement local du revêtement de surface éventuellement appliqué ultérieurement à cette plaque de façade.

La présente invention a d'une manière générale pour objet une disposition permettant d'éviter cet inconvénient.

De manière plus précise, elle a pour objet une scie cloche du genre comportant, d'une part, à un premier niveau, pour la découpe d'un trou dans une plaque, une lame de scie de forme générale cylindrique, et, d'autre part, à un deuxième niveau, pour l'exécution d'un lamage autour d'un tel trou, des moyens d'enlèvement de matière, qui, disposés coaxialement autour de la lame de scie, interviennent axialement en retrait par rapport à celle-ci. Ces moyens d'enlèvement de matière comportent une deuxième lame de scie, qui, comme la première lame de scie, est de forme générale cylindrique. Les revendications dépendantes présentent des modes particuliers avantageux de réalisation de l'invention.

Il s'avère, en effet, que, lorsque la plaque de façade travaillée est une plaque de plâtre, la deuxième lame de scie mise en oeuvre suivant l'invention assure avantageusement une découpe particulièrement propre de la feuille de carton présente à la surface de cette plaque de plâtre, en entaillant ensuite sur la profondeur requise l'âme en plâtre sous-jacente à cette feuille de carton.

Il est ainsi obtenu, concentriquement par rapport au trou pratiqué par la première lame de scie, un trait de scie de contour circulaire aussi net que le propre contour de ce trou.

Lorsque, ce qui est le cas le plus fréquent, l'extension radiale à donner au lamage recherché est supérieure à la simple voie d'une lame de scie, il suffit, suivant un développement de l'invention, de disposer la deuxième lame de scie radialement à distance de la première.

L'expérience montre, en effet, que, de manière assez surprenante, et en tout cas non révélée à ce jour, la seule exécution d'un trait de scie à distance du trou par ailleurs pratiqué suffit à l'élimination totale, sur la profondeur de ce trait de scie, de la matière présente entre lui et ce trou.

On peut par exemple supposer que les vibrations auxquelles est inévitablement soumise la plaque de façade travaillée lors de l'exécution de ce trait de scie ébranlent suffisamment la matière constitutive de cette plaque de façade pour être à l'origine de l'élimination de matière constatée entre ce trait de scie et le trou qu'il entoure.

Quoi qu'il en soit, les essais confirment que la scie cloche à deux niveaux suivant l'invention permet avantageusement, et très simplement, d'obtenir, sur toute la largeur radiale nécessaire au besoin, un lamage particulièrement propre et net autour du trou découpé par ailleurs dans la plaque de façade travaillée.

Les caractéristiques et avantages de l'invention ressortiront d'ailleurs de la description qui va suivre, à titre d'exemple, en référence aux dessins schématiques annexés sur lesquels :
la figure 1 est une vue en coupe d'une plaque dans laquelle est découpé un trou entouré du lamage recherché ;
la figure 2 reprend, à échelle supérieure, le détail de la figure 1 repéré par un encart II sur cette figure 1 ;
la figure 3 est une vue en perspective d'une scie cloche mise en oeuvre pour le façonnage de ce trou et de ce lamage ;
la figure 4 est, à échelle supérieure, une vue partielle en coupe axiale de cette scie cloche, suivant la ligne IV-IV de la figure 3 ;
les figures 5A, 5B sont des vues en coupe qui, analogues à celle de la figure 1, illustrent chacune respectivement deux phases successives d'intervention de la scie cloche suivant l'invention.

Tel qu'illustré sur ces figures, il s'agit, globalement, d'assurer la découpe d'un trou 10, de contour circulaire, dans une plaque 11, en prévoyant, annulairement, autour du trou 10, sur la surface d'attaque 12 correspondante de la plaque 11, un lamage 13.

En pratique, la plaque 11 forme l'une des plaques de façade d'une cloison sèche non représentée, et la surface d'attaque 12 en constitue la surface extérieure.

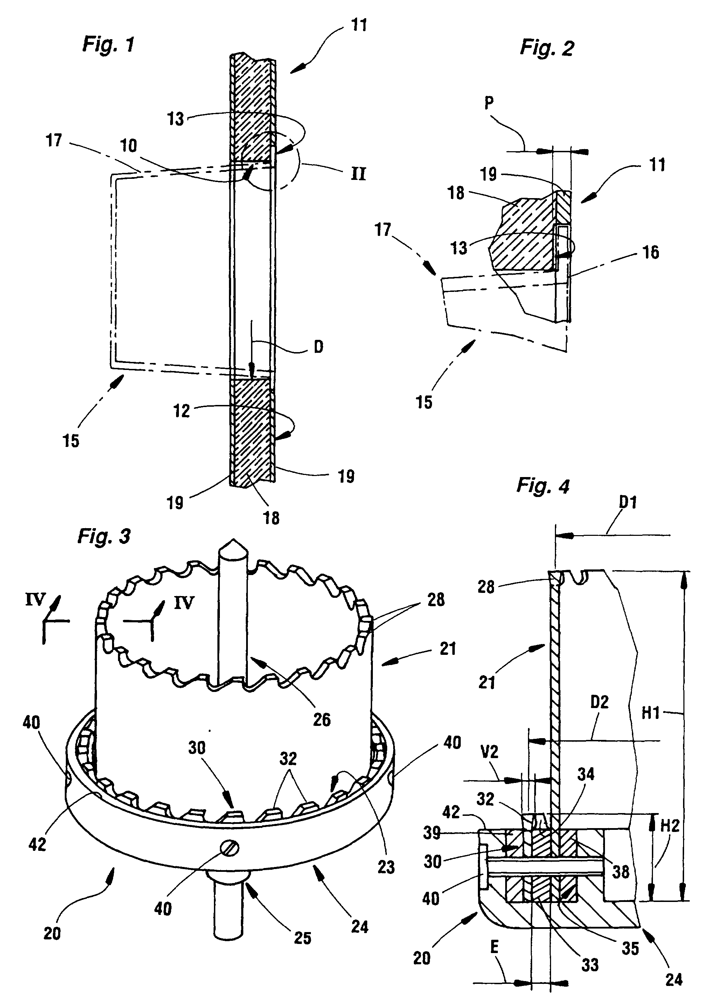

En pratique, également, il s'agit, d'une manière plus générale, de façonner, dans une telle cloison sèche, un logement, non détaillé sur les figures, qui, tel que schématisé en traits interrompus sur la figure 1, est destiné à permettre l'encastrement, dans cette cloison sèche, d'une boîte d'encastrement 15 présentant, en saillie vers l'extérieur, à son débouché, une collerette 16.

Le trou 10 doit avoir un diamètre D suffisant pour permettre le passage du corps 17 de la boîte d'encastrement 15, et le lamage 13 doit, corollairement, avoir une profondeur P suffisante pour recevoir la collerette 16 de cette boîte d'encastrement 15 sans que celle-ci fasse saillie sur la surface d'attaque 12 de la plaque 11.

En pratique, enfin, la plaque 11 est, dans la forme de mise en oeuvre représentée, une plaque de plâtre, c'est-à-dire une plaque comportant une âme en plâtre 18 en sandwich entre deux feuilles de carton 19.

Dans la forme de mise en oeuvre représentée, la profondeur P du lamage 13 doit être au moins égale à celle d'une telle feuille de carton 19, en étant, préférentiellement, légèrement supérieure à celle-ci.

De manière connue en soi, pour la découpe du trou 10 et pour l'exécution du lamage 13, il est mis en oeuvre une scie cloche 20 à deux niveaux.

Cette scie cloche 20 comporte, globalement, d'une part, à un premier niveau, pour la découpe du trou 10 dans la plaque 11, une lame de scie 21 de forme générale cylindrique, et, d'autre part, à un deuxième niveau, pour l'exécution du lamage 13 autour d'un tel trou 10, des moyens d'enlèvement de matière 23 qui, disposés coaxialement autour de la lame de scie 21, interviennent axialement en retrait par rapport à celle-ci.

De manière connue en soi, et suivant des dispositions décrites plus en détail ultérieurement, la lame de scie 21 est portée par un support 24 propre à son entraînement en rotation.

Par exemple, et tel que visible sur la figure 3, ce support 24 porte, axialement, dans sa zone centrale, du côté opposé à la lame de scie 21, un embout tubulaire 25 à la faveur duquel il peut être calé en rotation sur un foret 26, et, par cet embout tubulaire 25 et/ou par ce foret 26, il est propre à être monté sur un quelconque outil d'entraînement en rotation, par exemple une perceuse.

Préférentiellement, et cela est le cas dans la forme de réalisation représentée, le foret 26 traverse de part en part le support 24, et il s'étend axialement au-delà de la lame de scie 21, pour le forage d'un avant-trou dans la plaque 11.

Dans la forme de réalisation représentée, le support 24 se présente sous la forme générale d'un disque plus ou moins épais.

Soit D1 le diamètre de la lame de scie 21 sur ce support 24, et soit H1 sa hauteur par rapport à celui-ci, mesurés suivant des conditions qui seront précisées ultérieurement.

Le diamètre D1 est sensiblement égal au diamètre D du trou 10 à découper.

La hauteur H1 est faite suffisante pour convenir à la découpe d'un tel trou 10 dans les plaques 11 d'épaisseurs les plus usuelles.

De manière connue en soi, enfin, les dents 28 de la lame de scie 21 interviennent sur sa tranche, et, de manière usuelle, elles sont alternativement en devers de part et d'autre de son épaisseur, suivant ce qu'il est convenu d'appeler une voie.

Par exemple, la lame de scie 21 peut être réalisée à l'aide d'un feuillard convenablement enroulé en cylindre, soit que les extrémités de ce feuillard aboutées l'une à l'autre soient dûment solidarisées l'une à l'autre, soit qu'elles restent libres l'une par rapport à l'autre.

En variante, il peut s'agir d'un tronçon de tube.

Les dispositions qui précèdent sont d'ailleurs bien connues par elles-mêmes, et, ne relevant pas, en propre, de la présente invention, elles ne seront pas décrites plus en détail ici.

Seuls seront décrits dans ce qui suit les éléments de l'invention nécessaires à la compréhension de celle-ci.

Suivant l'invention, les moyens d'enlèvement de matière 23 comportent une deuxième lame de scie 30, qui, comme la première lame de scie 21, est de forme générale cylindrique.

En pratique, dans la forme de réalisation représentée, les moyens d'enlèvement de matière 23 se limitent à cette deuxième lame de scie 30.

Cette deuxième lame de scie 30, peut, si désiré, avoir une constitution de même type que celle de la première lame de scie 21.

Mais, en variante, elle peut aussi bien avoir une constitution différente.

Par exemple, la lame de scie 21 peut être formée par un feuillard, et la lame de scie 30 par un tronçon de tube, ou inversement.

La constitution propre de chacune des lames de scie 21 et 30 est d'ailleurs parfaitement indifférente à l'égard de l'invention.

Dans la forme de réalisation représentée, les deux lames de scie 21 et 30 ont en commun un même support, en l'espèce le support 24.

Soit D2 le diamètre de la lame de scie 30 par rapport à ce support 24, et soit H2 sa hauteur par rapport à celui-ci, mesurés suivant les mêmes conditions que le diamètre D1 de la première lame de scie 21 et que la hauteur H1 de celle-ci.

Le diamètre D2 de la deuxième lame de scie 30 est légèrement supérieur au diamètre D1 de la première lame de scie 21

En revanche, sa hauteur H2 est largement inférieure à la hauteur H1 de cette dernière.

En pratique, le diamètre D2 de la lame de scie 30 est globalement égal au diamètre extérieur du lamage 13 recherché.

Comme la lame de scie 21, la lame de scie 30 présente des dents 32 sur sa tranche.

Soit V2 la voie de ces dents 32, tel que schématisé sur la figure 4.

Préférentiellement, et cela est le cas dans la forme de réalisation représentée, la deuxième lame de scie 30 prévue suivant l'invention est disposée radialement à distance de la première lame de scie 21.

Autrement dit, les deux lames de scie 21 et 30 ne sont pas jointives.

Au contraire, il est prévu, entre elles, dans la forme de réalisation représentée, une entretoise 33 qui les maintient écartées l'une de l'autre.

Cette entretoise 33 peut être circulairement continue.

En variante, elle peut être fragmentée en plots intervenant de place en place.

En pratique, l'épaisseur E de cette entretoise 33 est largement supérieure à la moitié de la voie V2 de la lame de scie 30.

Ainsi, il subsiste un interstice 34 totalement libre entre les dents 32 de la lame de scie 30 et la lame de scie 21.

Dans la forme de réalisation représentée, le support 24 commun aux deux lames de scie 21 et 30 comporte, annulairement, une gorge 35 dans laquelle ces deux lames de scie 21 et 30 sont l'une et l'autre engagées, en étant en pratique en butée contre son fond.

C'est donc en pratique à compter de ce fond que les hauteurs H1 et H2 des lames de scie 21 et 30 sont ici appréciées.

L'entretoise 33 intervient au sein de la gorge 35, à compter, elle aussi, du fond de celle-ci.

Dans la forme de réalisation représentée, il y a également une entretoise 38 entre le flanc interne de la gorge 35 du support 24 et la première lame de scie 21, et une entretoise 39 entre le flanc externe de cette gorge 35 et la deuxième lame de scie 30.

Comme l'entretoise 33, les entretoises 38, 39 peuvent être circulairement continues ou être fractionnées en plots.

Dans la forme de réalisation représentée, elles s'étendent, elles aussi, l'une et l'autre, à compter du fond de la gorge 35.

Dans la forme de réalisation représentée, les lames de scie 21 et 30 sont, de place en place, liées au support 24 par des organes de fixation 40 qu'elles ont l'une et l'autre en commun.

Il s'agit, par exemple, de vis qui, intervenant radialement au niveau de la gorge 35 du support 24, recoupent tant les lames de scie 21 et 30 que les entretoises 33, 38 et 39 associées à celles-ci.

Préférentiellement, et cela est le cas dans la forme de réalisation représentée, à la deuxième lame de scie 30 prévue suivant l'invention est associée une butée 42, qui, solidaire du support 24, intervient axialement en retrait par rapport à elle.

Dans la forme de réalisation représentée, cette butée 42 est d'un seul tenant avec le support 24.

Plus précisément, dans cette forme de réalisation, elle est formée par la tranche du flanc externe de la gorge 35 de ce support 24.

Cette butée 42 s'étend donc annulairement, par exemple en continu, comme représenté, autour de la deuxième lame de scie 30.

Dans la forme de réalisation représentée, elle s'étend, en outre, axialement, entre la crête et la racine des dents 32 de cette deuxième lame de scie 30.

Autrement dit, dans cette forme de réalisation, seule émerge de la gorge 35 du support 24, pour la lame de scie 30, l'extrémité des dents 32.

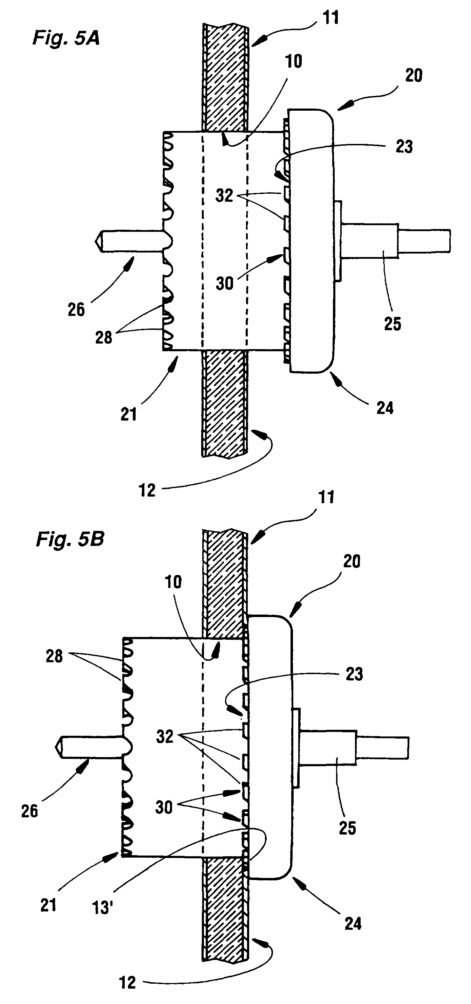

Lors de la mise en oeuvre de la scie cloche 20 suivant l'invention, et tel que schématisé sur les figures 5A et 5B, il est d'abord procédé à la découpe du trou 10 par la première lame de scie 21, figure 5A, puis à l'exécution d'un trait de scie circulaire 13' autour du trou 10 par la deuxième lame de scie 30, figure 5B.

Au retrait de la scie cloche 20, on constate la formation, sur la surface d'attaque 12 de la plaque 11, autour du trou 10 découpé dans celle-ci, du lamage 13 recherché.

Ainsi qu'on l'aura compris, par ailleurs, la butée 42 associée à la deuxième lame de scie 30 prévue suivant l'invention permet, par venue au contact de la surface d'attaque 12 de la plaque 11, de limiter, à la profondeur voulue, l'engagement de cette lame de scie 30 dans cette plaque 11.

En particulier, les deux lames de scie mises en oeuvre n'ont pas nécessairement en commun un même support.

Au contraire, elles peuvent chacune avoir un support individuel tout en étant par exemple solidaires d'un moyeu commun par celui-ci.

## Revendications

1. Scie cloche du genre comportant, d'une part, à un premier niveau, pour la découpe d'un trou (10) dans une plaque (11), une lame de scie (21) de forme générale cylindrique, et, d'autre part, à un deuxième niveau, pour l'exécution d'un lamage (13) autour d'un tel trou (10), des moyens d'enlèvement de matière (23), qui, disposés coaxialement autour de la lame de scie (21), interviennent axialement en retrait par rapport à celle-ci, **caractérisée en ce que** ces moyens d'enlèvement de matière (23) comportent une deuxième lame de scie (30), qui, comme la première lame de scie (21), est de forme générale cylindrique.

2. Scie cloche suivant la revendication 1, **caractérisée en ce que**, à la deuxième lame de scie (30), est associée une butée (42), qui intervient axialement en retrait par rapport à elle.

3. Scie cloche suivant la revendication 2, **caractérisée en ce que** la butée (42) s'étend entre la crête et la racine des dents (32) de la deuxième lame de scie (30).

4. Scie cloche suivant l'une quelconque des revendications 2, 3, **caractérisée en ce que** la butée (42) s'étend annulairement autour de la deuxième lame de scie (30).

5. Scie cloche suivant l'une quelconque des revendications 1 à 4, **caractérisée en ce que** les deux lames de scie (21, 30) ont en commun un même support (24).

6. Scie cloche suivant la revendication 5, **caractérisée en ce que** le support (24) comporte, annulairement, une gorge (35) dans laquelle les deux lames de scie (21, 30) sont l'une et l'autre engagées.

7. Scie cloche suivant les revendications 2 et 5, prises conjointement, **caractérisée en ce que** la butée (42) associée à la deuxième lame de scie (30) est d'un seul tenant avec le support (24).

8. Scie cloche suivant les revendications 6 et 7, prises conjointement, **caractérisée en ce que** la butée (42) est formée par la tranche du flanc externe de la gorge (35) du support (24).

9. Scie cloche suivant l'une quelconque des revendications 5 à 8, **caractérisée en ce que** les deux lames de scie (21, 30) sont, de place en place, liées au support (24) par des organes de fixation (40) qu'elles ont l'une et l'autre en commun.

10. Scie cloche suivant l'une quelconque des revendications 1 à 9, **caractérisée en ce que** la deuxième lame de scie (30) est disposée radialement à distance de la première lame de scie (21).

11. Scie cloche suivant la revendication 10, **caractérisée en ce qu'**il est prévu, entre les deux lames de scies (21, 30), une entretoise (33).

12. Scie cloche suivant les revendications 6 et 11, prises conjointement, **caractérisée en ce qu'**il y a également une entretoise (38) entre le flanc interne de la gorge (35) du support (24) et la première lame de scie (21), et une entretoise (39) entre le flanc externe de cette gorge (35) et la deuxième lame de scie (30).

## Claims

1. A cup saw of the type comprising, on the one hand, at a first level, for cutting out a hole (10) in a plate (11), a saw blade (21) of general cylindrical shape and, on the other hand, at a second level, for effecting a facing operation (13) around such a hole (10), material-removal means (23) which, being disposed coaxially around the saw blade (21), come into operation in axially set-back relationship with respect thereto, **characterised in that** said material-removal means (23) comprise a second saw blade (30) which, like the first saw blade (21), is of general cylindrical shape.

2. A cup saw according to claim 1 **characterised in that** associated with the second saw blade (30) is an abutment (42) which comes into operation in axially set-back relationship with respect thereto.

3. A cup saw according to claim 2 **characterised in that** the abutment (42) extends between the tip and the root of the teeth (32) of the second saw blade (30).

4. A cup saw according to either one of claims 2 and 3 **characterised in that** the abutment (42) extends annularly around the second saw blade (30).

5. A cup saw according to any one of claims 1 to 4 **characterised in that** the two saw blades (21, 30) have the same support (24) in common.

6. A cup saw according to claim 5 **characterised in that** the support (24) annularly comprises a groove (35) into which the two saw blades (21, 30) are both engaged.

7. A cup saw according to claims 2 and 5 in combination **characterised in that** the abutment (42) associated with the second saw blade (30) is in one piece with the support (24).

8. A cup saw according to claims 6 and 7 in combination **characterised in that** the abutment (42) is formed by the edge of the external flank of the groove (35) of the support (24).

9. A cup saw according to any one of claims 5 to 8 **characterised in that** the two saw blades (21, 30) are connected in place-wise manner to the support (24) by fixing members (40) which they both have in common.

10. A cup saw according to any one of claims 1 to 9 **characterised in that** the second saw blade (30) is disposed radially at a spacing from the first saw blade (21).

11. A cup saw according to claim 10 **characterised in that** a spacer (33) is provided between the two saw blades (21, 30).

12. A cup saw according to claims 6 and 11 in combination **characterised in that** there is also a spacer (38) between the internal flank of the groove (35) of the support (24) and the first saw blade (21) and a spacer (39) between the external flank of said groove (35) and the second saw blade (30).

## Patentansprüche

1. Glockensäge, umfassend einerseits auf einem ersten Niveau zum Ausschneiden eines Lochs (10) in einer Platte (11) ein Sägeblatt (21) von allgemeiner zylindrischer Form und andererseits auf einem zweiten Niveau zur Herstellung einer Absenkung (13) um ein solches Loch (10) herum Mittel (23) zum Werkstoffabtrag, die koaxial um das Sägeblatt (21) herum angeordnet sind und bezüglich dieses axial zurückversetzt sind, **dadurch gekennzeichnet, dass** diese Werkstoffabtragmittel (23) ein zweites Sägeblatt (30) umfassen, das wie das erste Sägeblatt (21) von allgemeiner zylindrischer Form ist.

2. Glockensäge nach Anspruch 1, **dadurch gekennzeichnet, dass** dem zweiten Sägeblatt (30) ein Anschlag (42) zugeordnet ist, der in Bezug auf dieses axial zurückversetzt ist.

3. Glockensäge nach Anspruch 2, **dadurch gekennzeichnet, dass** der Anschlag (42) sich zwischen dem Scheitel und der Wurzel der Zähne (32) des zweiten Sägeblatts (30) erstreckt.

4. Glockensäge nach einem der Ansprüche 2, 3, **dadurch gekennzeichnet, dass** der Anschlag (42) sich ringförmig um das zweite Sägeblatt (30) herum erstreckt.

5. Glockensäge nach einem der Ansprüche 1 bis 4, **dadurch gekennzeichnet, dass** die beiden Sägeblätter (21, 30) ein und denselben Halter (24) gemeinsam haben.

6. Glockensäge nach Anspruch 5, **dadurch gekennzeichnet, dass** der Halter (24) ringförmig eine Nut (35) aufweist, in welche die beiden Sägeblätter (21, 30) gemeinsam eingesetzt sind.

7. Glockensäge nach den Ansprüchen 2 und 5 zusammen, **dadurch gekennzeichnet, dass** der dem zweiten Sägeblatt (30) zugeordnete Anschlag (42) einstückig mit dem Halter (24) ausgeführt ist.

8. Glockensäge nach den Ansprüchen 6 und 7 zusammen, **dadurch gekennzeichnet, dass** der Anschlag (42) von der Kante der Außenflanke der Nut (35) des Halters (24) gebildet ist.

9. Glockensäge nach einem der Ansprüche 5 bis 8, **dadurch gekennzeichnet, dass** die beiden Sägeblätter (21, 30) in Abständen mit dem Halter (24) durch Befestigungsorgane (40) verbunden sind, die sie beide gemeinsam haben.

10. Glockensäge nach einem der Ansprüche 1 bis 9, **dadurch gekennzeichnet, dass** das zweite Sägeblatt (30) radial in einem Abstand von dem ersten Sägeblatt (21) angeordnet ist.

11. Glockensäge nach Anspruch 10, **dadurch gekennzeichnet, dass** zwischen den beiden Sägeblättern (21, 30) ein Distanzelement (33) vorgesehen ist.

12. Glockensäge nach den Ansprüche 6 und 11 zusammen, **dadurch gekennzeichnet, dass** auch ein Distanzelement (38) zwischen der Innenflanke der Nut (35) des Halters (24) und dem ersten Sägeblatt (21) und ein Distanzelement (39) zwischen der Außenflanke dieser Nut (35) und dem zweiten Sägeblatt (30) vorgesehen ist.
